# EUROPÄISCHE PATENTSCHRIFT

(11) **EP 3 802 118 B1**
(45) Veröffentlichungstag und Bekanntmachung des Hinweises auf die Patenterteilung: **07.01.2026**
(21) Anmeldenummer: 19728697.4
(22) Anmeldetag: 06.06.2019
(51) Int. Cl.: B32B 17/10, G02F 1/1343

(54) **FUNKTIONSELEMENT MIT ELEKTRISCH STEUERBAREN OPTISCHEN EIGENSCHAFTEN**
FUNCTIONAL ELEMENT WITH ELECTRICALLY DRIVEN OPTICAL PROPERTIES
ÉLÉMENT FONCTIONNEL PRÉSENTANT DES PROPRIÉTÉS OPTIQUES À COMMANDE ÉLECTRIQUE

(30) Priorität: 11.06.2018 EP 18177033
(43) Veröffentlichungstag der Anmeldung: 14.04.2021
(73) Patentinhaber: Saint-Gobain Sekurit France, 60150 Thourotte (FR)
(72) Erfinder: MANZ, Florian, 52064 Aachen (DE); DO ROSARIO, Jefferson, 52064 Aachen (DE); KLEIN, Marcel, 52499 Baesweiler (DE); LABROT, Michael, 52072 Aachen (DE); SZNERSKI, Andreas, 52477 Alsdorf (DE); SCHURSE, Sebastian, 52531 Übach-Palenberg (DE); SCHULZ, Valentin, 52382 Niederzier (DE)
(74) Vertreter: Gebauer, Dieter Edmund
(86) Internationale Anmeldenummer: PCT/EP2019/064767
(87) Internationale Veröffentlichungsnummer: WO 2019/238521

(56) Entgegenhaltungen:
- WO-A1-2010/032068
- WO-A1-2014/086555
- WO-A1-2017/157626
- DE-U1- 202018 102 520
- US-A1- 2005 227 061
- US-A1- 2014 063 432

## Beschreibung

Die Erfindung betrifft eine Verbundscheibe mit einem Funktionselement mit elektrisch steuerbaren optischen Eigenschaften, ein Verfahren zu deren Herstellung, sowie deren Verwendung.

Im Fahrzeugbereich und im Baubereich werden oftmals Verbundscheiben mit elektrisch steuerbaren Funktionselementen zum Sonnenschutz oder Sichtschutz eingesetzt.

So sind beispielsweise Windschutzscheiben bekannt, in denen eine Sonnenblende in Form eines Funktionselements mit elektrisch steuerbaren optischen Eigenschaften integriert ist. Dabei ist insbesondere die Transmission oder das Streuverhalten von elektromagnetischer Strahlung im sichtbaren Bereich elektrisch steuerbar. Die Funktionselemente sind in der Regel folienartig und werden in eine Verbundscheibe einlaminiert oder an diese angeklebt. Bei Windschutzscheiben kann der Fahrer das Transmissionsverhalten der Scheibe selbst gegenüber Sonnenstrahlung steuern. So kann auf eine herkömmliche mechanische Sonnenblende verzichtet werden. Dadurch kann das Gewicht des Fahrzeugs reduziert werden und es wird Platz im Dachbereich gewonnen. Zudem ist das elektrische Steuern der Sonnenblende für den Fahrer komfortabler als das manuelle Herunterklappen der mechanischen Sonnenblende.

Windschutzscheiben mit derartigen elektrisch steuerbaren Sonnenblenden sind beispielsweise bekannt aus WO 2014/086555 A1, WO 2017/157626 A1, DE 102013001334 A1, DE 102005049081 B3, DE 102005007427 A1 und DE 102007027296 A1.

Typische elektrisch steuerbare Funktionselemente enthalten elektrochrome Schichtstrukturen oder Suspended Particle Device (SPD)-Folien, wie beispielsweise aus der US 2005/227061 A1 bekannt ist. Weitere mögliche Funktionselemente zur Realisierung eines elektrisch steuerbaren Sonnenschutzes sind sogenannte PDLC-Funktionselemente (*polymer dispersed liquid crystal*), wie beispielsweise aus der DE 20 2018 102520 U1 bekannt ist. Deren aktive Schicht enthält Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Das PDLC-Funktionselement wirkt weniger durch Herabsetzung der Gesamttransmission, sondern durch Erhöhung der Streuung, um den Blendschutz zu gewährleisten.

Herkömmliche, einlaminierte Funktionselemente und insbesondere PDLC-Funktionselemente zeigen im Randbereich oftmals unerwünschte Alterungserscheinungen, wie Aufhellungen und Veränderungen in der Abschattung, wie beispielsweise aus der WO 2010/032068 A1 bekannt ist.

DE 202018102520 U1 zeigt ein Funktionselement mit einer Trägerfolie mit Überstand, auf der ein Sammelleiter angeordnet ist.

WO 2017/157626 A1 zeigt ein Funktionselement mit einer Randversiegelung, welche den beiden außenliegenden Oberflächen der Trägerfolien anliegt.

US 2014063432 A1 zeigt eine Anzeigevorrichtung mit einem ersten Glas-Substrat, einer ersten elektrisch leitfähigen Schicht, einer Flüssigkristallschicht, einer zweiten elektrisch leitfähigen Schicht und einem zweiten Glas-Substrat. Das zweite Glas-Substrat weist einen Überstand auf, wobei eine erste Dichtungsmasse und eine zweite Dichtungsmasse so aufgebracht sind, dass sie mit einem Randbereich der außenliegenden Oberfläche des ersten Glas-Substrats und der innenliegenden Oberfläche des zweiten Glas-Substrats in Kontakt stehen und die Flüssigkristallschicht abdichten.

Der vorliegenden Erfindung liegt daher die Aufgabe zugrunde, eine Verbundscheibe mit einem verbesserten Funktionselement mit elektrisch steuerbaren optischen Eigenschaften bereitzustellen, das insbesondere hinsichtlich seiner Alterungsbeständigkeit verbessert ist.

Die Aufgabe der vorliegenden Erfindung wird durch eine Verbundscheibe mit einem Funktionselement mit elektrisch steuerbaren optischen Eigenschaften gemäß dem unabhängigen Anspruch 1 gelöst. Bevorzugte Ausführungen gehen aus den Unteransprüchen hervor.

Weitere Aspekte der Erfindung umfassen ein Verfahren zur Herstellung und die Verwendung der erfindungsgemäßen Verbundscheibe mit einem Funktionselement mit optisch steuerbaren Eigenschaften.

Das Funktionselement mit elektrisch steuerbaren optischen Eigenschaften der erfindungsgemäßen Verbundscheibe umfasst mindestens eine Stapelfolge aus einer ersten Trägerfolie, einer ersten Flächenelektrode, einer aktiven Schicht, einer zweiten Flächenelektrode und einer zweiten Trägerfolie, wobei die zweite Trägerfolie einen überstehenden Bereich über die erste Trägerfolie aufweist und eine Sperrfolie auf mindestens einem Randbereich der ersten Trägerfolie und dem überstehenden Bereich der zweiten Trägerfolie angeordnet ist.

In dem Funktionselement überspannt die Sperrfolie den Bereich zwischen dem überstehenden Bereich der zweiten Trägerfolie und dem Randbereich der ersten Trägerfolie in dem die Austrittsfläche der aktiven Schicht angeordnet ist. Dadurch versiegelt die Sperrfolie die Austrittsfläche der aktiven Schicht zwischen der ersten Trägerfolie und der zweiten Trägerfolie an der jeweiligen Seitenkante.

Die erste Flächenelektrode ist dabei auf der innenliegenden Oberfläche der ersten Trägerfolie angeordnet und mit dieser bevorzugt unmittelbar verbunden. Die zweite Flächenelektrode ist dabei auf der innenliegenden Oberfläche der zweiten Trägerfolie angeordnet und mit dieser bevorzugt unmittelbar verbunden. Zwischen der zweiten Trägerfolie und der Sperrfolie kann lediglich noch die zweite Flächenelektrode angeordnet sein. Alternativ kann die zweite Flächenelektrode in diesem Bereich entfernt sein, was die Haftung und den Verbund zwischen Sperrfolie und der zweiten Trägerelektrode verbessert.

Die Sperrfolie ist somit im überstehenden Bereich auf der innenliegenden Oberfläche der zweiten Trägerfolie und im Randbereich der außenliegenden Oberfläche der ersten Trägerfolie angeordnet. Die Sperrfolie bedeckt die zwischen erster und zweiter Trägerfolie befindliche Austrittsfläche der aktiven Schicht an der jeweiligen Seitenkante und versiegelt diese. Dadurch ist eine kompakte und niedrige Bauform möglich, die sich besonders gut in eine Verbundscheibe einlaminieren lässt. Die Sperrfolie ist vorteilhafterweise nicht um die zweite Trägerfolie herumgeführt und berührt auch nicht die außenliegende Oberfläche der zweiten Trägerfolie.

In dem Funktionselement weist die zweite Trägerfolie einen Überstand über die erste Trägerfolie auf, das heißt, die zweite Trägerfolie weist einen überstehenden Bereich mit der Breite u auf. Mit anderen Worten: die zweite Trägerfolie ist in diesem Bereich breiter dimensioniert.

Die Begriffe "Überstand" bzw. "überstehen" bedeuten, wie allgemein üblich verwendet: in lateraler (horizontaler) Richtung über etwas hinausragen. In diesem Fall ragt die zweite Trägerfolie in der Ebene des Funktionselements über die erste Trägerfolie hinaus. Lateral bedeutet hier, wie allgemein üblich verwendet: seitlich oder seitwärts.

Der überstehende Bereich weist vorteilhafterweise mindestens eine Breite u von 3 mm, bevorzugt von mindestens 5 mm und besonders bevorzugt von mindestens 8 mm auf.

Der überstehende Bereich weist vorteilhafterweise maximale Breite u von 50 mm, bevorzugt von 20 mm und besonders bevorzugt von 10 mm auf.

In dem Funktionselement weist zumindest eine Seitenkante, bevorzugt drei Seitenkanten und besonders bevorzugt alle Seitenkanten, einen überstehenden Bereich der zweiten Trägerfolie über die erste Trägerfolie auf, der jeweils mit einer, drei oder mehr Sperrfolien bedeckt ist. Im Bereich der Kontaktierung der Flächenelektrode invertiert sich die Stapelfolge. Dieser Bereich kann auch auf eine komplette Seitenkante oder mehrere Seitenkanten erweitert sein.

Vorteilhafterweise ist die Sperrfolie mit der außenliegenden Oberfläche der ersten Trägerfolie stoffschlüssig und/oder formschlüssig verbunden, bevorzugt verschmolzen und/oder verklebt.

Des Weiteren ist die Sperrfolie vorteilhafterweise mit der innenliegenden Oberfläche der zweiten Trägerfolie stoffschlüssig und/oder formschlüssig verbunden, bevorzugt verschmolzen und/oder verklebt. Besonders vorteilhaft ist es, wenn die Sperrfolie mit der innenliegenden Oberfläche der zweiten Trägerfolie nur punktuell verbunden ist und dabei bevorzugt verschmolzen und/oder verklebt ist.

Die Sperrfolie ist vollständig oder abschnittsweise mit der ersten und der zweiten Trägerfolie verbunden.

In einer vorteilhaften Ausgestaltung des Funktionselements beträgt die Breite w des Randbereichs der Sperrfolie auf der ersten Trägerfolie mindestens 3 mm, bevorzugt mindestens 4 mm, besonders bevorzugt mindestens 5 mm und insbesondere mindestens 8 mm.

In einer weiteren vorteilhaften Ausgestaltung des Funktionselements beträgt die Breite w des Randbereichs der Sperrfolie auf der ersten Trägerfolie weniger als 50 mm, bevorzugt weniger als 30 mm und besonders bevorzugt weniger als 10 mm.

Die erfindungsgemäße Verbundscheibe umfasst eine Stapelfolge aus einer Außenscheibe, einer ersten Zwischenschicht, einer zweiten Zwischenschicht und einer Innenscheibe, wobei die Zwischenschichten jeweils mindestens eine thermoplastische polymere Folie mit mindestens einem Weichmacher enthalten, wobei zwischen der ersten Zwischenschicht und der zweiten Zwischenschicht zumindest abschnittsweise ein Funktionselement mit elektrisch steuerbaren optischen Eigenschaften angeordnet ist.

Die Verbundscheibe kann beispielsweise die Windschutzscheibe oder die Dachscheibe eines Fahrzeugs oder eine andere Fahrzeugverglasung sein, beispielsweise eine Trennscheibe in einem Fahrzeug, bevorzugt in einem Schienenfahrzeug oder einem Bus. Alternativ kann die Verbundscheibe eine Architekturverglasung, beispielsweise in einer Außenfassade eines Gebäudes oder eine Trennscheibe im Innern eines Gebäudes sein.

Die Begriffe Außenscheibe und Innenscheibe beschreiben willkürlich zwei verschiedene Scheiben. Insbesondere kann die Außenscheibe als eine erste Scheibe und die Innenscheibe als eine zweite Scheibe bezeichnet werden.

Ist die Verbundscheibe dafür vorgesehen, in einer Fensteröffnung eines Fahrzeugs oder eines Gebäudes einen Innenraum gegenüber der äußeren Umgebung abzutrennen, so wird mit Innenscheibe im Sinne der Erfindung die dem Innenraum (Fahrzeuginnenraum) zugewandte Scheibe (zweite Scheibe) bezeichnet. Mit Außenscheibe wird die der äußeren Umgebung zugewandte Scheibe (erste Scheibe) bezeichnet. Die Erfindung ist aber darauf nicht eingeschränkt.

Ebenso kann das Funktionselement in der Verbundscheibe beidseitig angeordnet sein. Das heißt, entweder ist die erste Trägerfolie auf der der Außenscheibe zugewandten Seite des Funktionselements angeordnet oder auf der der Innenscheibe zugewandten Seite des Funktionselements.

Die erfindungsgemäße Verbundscheibe enthält ein Funktionselement mit elektrisch steuerbaren optischen Eigenschaften, das zwischen einer ersten Zwischenschicht und einer zweiten Zwischenschicht zumindest abschnittsweise angeordnet ist. Die erste und zweite Zwischenschicht weist üblicherweise dieselben Abmessungen wie die Außenscheibe und die Innenscheibe auf. Das Funktionselement ist bevorzugt folienartig.

Wie oben bereits erwähnt, sind in dem Funktionselement, die Sperrfolie und die erste Trägerfolie und die zweite Trägerfolie lokal punktuell, abschnittsweise oder vollflächig fest miteinander verbunden, beispielsweise verschmolzen oder verklebt. Dadurch wird eine ausreichende und sichere Diffusionssperre für Weichmacher aus der Zwischenschicht erzeugt und eine Eintrübung des Randbereichs des Funktionselements vermindert oder verhindert.

In einer vorteilhaften Ausgestaltung der erfindungsgemäßen Verbundscheibe ist die Sperrfolie beziehungsweise sind die Sperrfolien bevorzugt mit der ersten und der zweiten Trägerfolie verpresst (beispielsweise durch Lamination in der Verbundscheibe). Eine Verklebung, Verschmelzung oder Verschweißung (beispielsweise durch lokales Erwärmen) ist dann optional. Dadurch wird eine ausreichende und sichere Diffusionssperre für Weichmacher aus der Zwischenschicht erzeugt und eine Eintrübung des Randbereichs des Funktionselements vermindert oder verhindert.

In einer weiteren vorteilhaften Ausgestaltung des Funktionselements sind die Sperrfolien vollflächig mit den angrenzenden Flächen der ersten und zweiten Trägerfolie verbunden und bevorzugt verklebt, beispielsweise durch ein Klebemittel, insbesondere durch einen Klebstoff auf Acryl-Basis, bevorzugt auf Acrylat-Basis und ganz besonders bevorzugt durch einen Klebstoff, der mehr als 50% Methylmetacrylat enthält. Dies hat den besonderen Vorteil, dass ein Verrutschen der Sperrfolie während der Montage und während des Laminierens vermieden wird und die Sperrfolie fest und anliegend mit dem Funktionselement verbunden ist. Dadurch werden unter anderem Lufteinschlüsse zwischen Sperrfolie und Funktionselement vermieden und die optische Qualität derartiger Verbundscheiben ist besonders hoch.

Alternativ kann die Sperrfolie mit einer Acryl-basierten Flüssigkeit fixiert werden. Beim Laminieren wird die Flüssigkeit durch ein Vakuum aus der Kontaktfläche zwischen Sperrfolie und Trägerfolie gesaugt oder diffundiert in die Folien ein.

In einer weiteren vorteilhaften Ausgestaltung der erfindungsgemäßen Verbundscheibe sind die Sperrfolien nur abschnittsweise mit der ersten und/oder der zweiten Trägerfolie verbunden, sodass beim Entlüften während des Laminierprozesses, eingeschlossene Luft zwischen Sperrfolie und Funktionselement entweichen kann und keine Lufteinschlüsse verbleiben, die die optische Qualität der Verbundscheibe mindern.

Die Erfindung beruht auf der Erkenntnis der Erfinder, dass die Diffusion von Weichmachern aus den Zwischenschichten in das Innere des Funktionselements bei Alterung zu einer Aufhellung oder Veränderung der Transmission führt, was die Durchsicht und Ästhetik der Verbundscheibe beeinträchtigt. Durch die Versiegelung des Funktionselements mit einer Sperrfolie, die die Diffusion von Weichmachern aus der Zwischenschicht in das Funktionselement und insbesondere in die Seitenkante des Funktionselements hemmt oder verhindert, werden solche Alterungserscheinungen deutlich vermindert oder vollständig verhindert. Dabei ist das Material der Trägerfolien und der Sperrschicht derart gewählt, dass eine Diffusion von Weichmachern verhindert oder verringert wird.

Die Versiegelung im Bereich der Austrittsfläche der aktiven Schicht, also der Fläche über die Weichmacher in die aktive Schicht eindringen können, erfolgt über die Sperrfolie die angrenzend mit dem überstehenden Bereich der zweiten Trägerfolie und/oder der ersten Trägerfolie verbunden, verpresst (beispielsweise durch Lamination im Innern der Verbundscheibe), verklebt (beispielsweise mit einem Klebemittel) oder verschweißt (beispielsweise durch lokales Erhitzen) sind.

In einer vorteilhaften Ausgestaltung der erfindungsgemäßen Verbundscheibe enthält die Zwischenschicht ein Polymer, bevorzugt ein thermoplastisches Polymer.

In einer besonders vorteilhaften Ausgestaltung der erfindungsgemäßen Verbundscheibe enthält die Zwischenschicht mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 40 Gew.-% eines Weichmachers. Der Weichmacher enthält oder besteht bevorzugt aus Triethylenglykol-bis-(2-ethylhexanoat).

Weichmacher sind dabei Chemikalien, die Kunststoffe weicher, flexibler, geschmeidiger und/oder elastischer machen. Sie verschieben den thermoelastischen Bereich von Kunststoffen hin zu niedrigeren Temperaturen, sodass die Kunststoffe im Bereich der Einsatz-Temperatur die gewünschten elastischeren Eigenschaften aufweisen. Weitere bevorzugte Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykols. Besonders bevorzugt werden als Weichmacher 3G7, 3G8 oder 4G7 eingesetzt, wobei die erste Ziffer die Anzahl der Ethlenglycoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C₄H₉CH (CH₂CH₃) CO (OCH₂CH₂)₃O₂CCH (CH₂CH₃) C₄H₉.

In einer weiteren besonders vorteilhaften Ausgestaltung der erfindungsgemäßen Verbundscheibe enthält die Zwischenschicht mindestens 60 Gew.-%, bevorzugt mindestens 70 Gew.-%, besonders bevorzugt mindestens 90 Gew.-% und insbesondere mindestens 97 Gew.-% Polyvinylbutyral.

Die Dicke jeder Zwischenschicht beträgt bevorzugt von 0,2 mm bis 2 mm, besonders bevorzugt von 0,3 mm bis 1 mm, insbesondere von 0,3 mm bis 0,5 mm, beispielsweise 0,38 mm.

In einer vorteilhaften Ausgestaltung des Funktionselements ist die Sperrfolie derart ausgebildet ist, dass sie die Diffusion von Weichmachern aus der Zwischenschicht durch die Sperrfolie verhindert.

In einer besonders vorteilhaften Ausgestaltung des Funktionselements ist die Sperrfolie Weichmacher-arm, bevorzugt mit einem Weichmacheranteil von weniger als 3 Gew.-%, besonders bevorzugt von weniger als 1 Gew.-% und insbesondere von weniger als 0,5 Gew.-%. Ganz besonders bevorzugt ist die Sperrfolie Weichmacher-frei, das heißt ohne gezielten Zusatz eines Weichmachers. Die Sperrfolie enthält ein Polymer, bevorzugt Polyethylenterephthalat (PET) oder Polyvinylfluorid (PVF) oder besteht daraus. Die Sperrfolie kann auch Weichmacher-armes Polyvinylbutyral (PVB) mit einem Weichmacheranteil von weniger als 3 Gew.-% enthalten.

Das optisch steuerbare Funktionselement umfasst eine aktive Schicht zwischen zwei Flächenelektroden. Die aktive Schicht weist die steuerbaren optischen Eigenschaften auf, welche über die an die Flächenelektroden angelegte Spannung gesteuert werden können. Die Flächenelektroden und die aktive Schicht sind typischerweise im Wesentlichen parallel zu den Oberflächen des Funktionselements und in einer Verbundscheibe im Wesentlichen parallel zu den Oberflächen der Außenscheibe und der Innenscheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluor-dotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Das Funktionselement kann außer der aktiven Schicht und den Flächenelektroden weitere an sich bekannte Schichten aufweisen, beispielsweise Barriereschichten, Blockerschichten, Antireflexionsschichten, IR-Reflexionsschichten, Schutzschichten und/oder Glättungsschichten.

Das Funktionselement liegt als Mehrschichtfolie mit zwei äußeren Trägerfolien vor. Bei einer solchen Mehrschichtfolie sind die Flächenelektroden und die aktive Schicht zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine erste Trägerfolie, eine erste Flächenelektrode, eine aktive Schicht, eine zweite Flächenelektrode und eine zweite Trägerfolie. Die Trägerfolie trägt insbesondere die Flächenelektroden und gibt einer flüssigen oder weichen aktiven Schicht die nötige mechanische Stabilität.

Die Trägerfolien enthalten bevorzugt zumindest ein thermoplastisches Polymer, besonders bevorzugt Weichmacher-armes oder Weichmacher-freies Polyethylenterephthalat (PET). Das ist besonders vorteilhaft im Hinblick auf die Stabilität der Mehrschichtfolie. Die Trägerfolien können aber auch andere Weichmacher-arme oder Weichmacher-freie Polymere enthalten oder daraus bestehen, beispielsweise Ethylenvinylacetat (EVA), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und/oder Ethylen-Tetrafluorethylen. Die Dicke jeder Trägerfolie beträgt bevorzugt von 0,04 mm bis 1 mm, besonders bevorzugt von 0,04 mm bis 0,2 mm.

Die Trägerfolien weisen jeweils eine elektrisch leitfähige Beschichtung auf, die der aktiven Schicht zugewandt ist und als Flächenelektrode fungiert.

In einer weiteren vorteilhaften Ausgestaltung der erfindungsgemäßen Verbundscheibe ist das Funktionselement ein PDLC-Funktionselement (*polymer dispersed liquid crystal*). Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Die Verbundscheibe wird so zu einer annähernd homogenen Lichtquelle. Wird an die Flächenelektroden eine Spannung angelegt, so richten sich die Flüssigkristalle in einer gemeinsamen Richtung aus und die Transmission von Licht durch die aktive Schicht wird erhöht. Objekte hinter der Scheibe werden sichtbar.

Grundsätzlich ist es aber auch möglich, andere Arten von steuerbaren Funktionselementen einzusetzen, beispielweise elektrochrome Funktionselemente oder SPD-Funktionselemente (*suspended particle device*). Die erwähnten steuerbaren Funktionselemente und deren Funktionsweise sind dem Fachmann an sich bekannt, sodass an dieser Stelle auf eine ausführliche Beschreibung verzichtet werden kann.

Funktionselemente als Mehrschichtfolien sind kommerziell erhältlich. Das zu integrierende Funktionselement wird typischerweise aus einer Mehrschichtfolie mit größeren Ausmaßen in der gewünschten Form und Größe ausgeschnitten. Dies kann mechanisch erfolgen, beispielsweise mit einem Messer. In einer vorteilhaften Ausführung erfolgt das Ausschneiden mittels eines Lasers. Es hat sich gezeigt, dass die Seitenkante in diesem Fall stabiler ist als beim mechanischen Schneiden. Bei mechanisch geschnittenen Seitenkanten kann die Gefahr bestehen, dass der Schichtaufbau beschädigt wird und das Funktionselement nicht mehr entsprechend schaltet, was optisch auffällig ist und die Ästhetik der Scheibe nachteilig beeinflusst.

In der erfindungsgemäßen Verbundscheibe ist das Funktionselement über einen Bereich der ersten Zwischenschicht mit der Außenscheibe und über einen Bereich der zweiten Zwischenschicht mit der Innenscheibe verbunden. Die Zwischenschichten sind bevorzugt flächig aufeinander angeordnet und miteinander laminiert, wobei das Funktionselement zwischen die beiden Schichten eingelegt ist. Die mit dem Funktionselement überlappenden Bereiche der Zwischenschichten bilden dann die Bereiche, welche das Funktionselement mit den Scheiben verbindet. In anderen Bereichen der Scheibe, wo die Zwischenschichten direkten Kontakt zueinander haben, können sie beim Laminieren derart verschmelzen, dass die beiden ursprünglichen Schichten unter Umständen nicht mehr erkennbar sind und stattdessen eine homogene Zwischenschicht vorliegt.

Eine Zwischenschicht kann beispielsweise durch eine einzige thermoplastische Folie ausgebildet werden. Eine Zwischenschicht kann auch als zweilagiger, dreilagiger oder mehrlagiger Folienstapel ausgebildet sein, wobei die einzelnen Folien gleiche oder unterschiedliche Eigenschaften aufweisen. Eine Zwischenschicht kann auch aus Abschnitten unterschiedlicher thermoplastischer Folien gebildet werden, deren Seitenkanten aneinandergrenzen.

In einer vorteilhaften Weiterbildung der erfindungsgemäßen Verbundscheibe ist der Bereich der ersten oder der zweiten Zwischenschicht, über den das Funktionselement mit der Außenscheibe beziehungsweise der Innenscheibe verbunden ist, getönt oder gefärbt. Die Transmission dieses Bereichs im sichtbaren Spektralbereich ist also herabgesetzt gegenüber einer nicht getönten oder gefärbten Schicht. Der getönte/gefärbte Bereich der Zwischenschicht erniedrigt somit die Transmission der Windschutzscheibe im Bereich der Sonnenblende. Insbesondere wird der ästhetische Eindruck des Funktionselements verbessert, weil die Tönung zu einem neutraleren Erscheinungsbild führt, das auf den Betrachter angenehmer wirkt.

Zur Funktionserweiterung kann eine Zwischenschicht für akustisch optimierte Scheiben auch aus 3 Einzellagen bestehen. In solchen Fällen ist die Zwischenschicht 0,05 mm bis 0,2 mm dicker ausgebildet.

Eine weitere Alternative stellt die thermische Verbesserung durch eine IR-reflektierend beschichtete PET-Folie dar. In diesem Fall besteht die nach außen gerichtete Zwischenschicht ebenfalls aus zumindest 3 Zwischenlagen (PVB-PET-PVB). Die IR-reflektierende Funktionsschicht kann nach innen oder außen gerichtet sein.

Unter elektrisch steuerbaren optischen Eigenschaften werden im Sinne der Erfindung solche Eigenschaften verstanden, die stufenlos steuerbar sind, aber gleichermaßen auch solche, die zwischen zwei oder mehr diskreten Zuständen geschaltet werden können.

Die elektrische Steuerung der Sonnenblende erfolgt beispielsweise mittels Schalter, Dreh- oder Schieberegler, die in den Armaturen des Fahrzeugs integriert sind. Es kann aber auch eine Schaltfläche zur Regelung der Sonnenblende in die zu schaltende Verbundscheibe, beispielsweise in die Windschutzscheibe, integriert sein, beispielsweise eine kapazitive Schaltfläche. Alternativ oder zusätzlich kann die Sonnenblende durch kontaktfreie Verfahren, beispielsweise durch das Erkennen von Gesten, oder in Abhängigkeit des durch eine Kamera und eine geeignete Auswerteelektronik festgestellten Zustands von Pupille oder Augenlid gesteuert werden. Alternativ oder zusätzlich kann die Sonnenblende durch Sensoren, welchen einen Lichteinfall auf die Scheibe detektieren, gesteuert werden.

Der getönte oder gefärbte Bereich der Zwischenschicht weist bevorzugt im transparenten Zustand eine Transmission im sichtbaren Spektralbereich von 1 % bis 50 % auf, besonders bevorzugt von 10% bis 40%. Damit werden besonders gute Ergebnisse erreicht hinsichtlich Blendschutz und optischem Erscheinungsbild.

Die Zwischenschicht kann durch eine einzelne thermoplastische Folie ausgebildet werden, in der der getönte oder gefärbte Bereich durch lokales Tönen oder Färben erzeugt wird. Solche Folien sind beispielsweise durch Koextrusion erhältlich. Alternativ können ein ungetönter Folienabschnitt und ein getönter oder gefärbter Folienabschnitt zur thermoplastischen Schicht zusammengesetzt werden.

Der getönte oder gefärbte Bereich kann homogen gefärbt oder getönt sein, das heißt, eine ortsunabhängige Transmission aufweisen. Die Tönung oder Färbung kann aber auch inhomogen sein, insbesondere kann ein Transmissionsverlauf realisiert sein. In einer Ausgestaltung nimmt der Transmissionsgrad im getönten oder gefärbten Bereich zumindest abschnittsweise mit steigendem Abstand zur Oberkante zu. So können scharfe Kanten des getönten oder gefärbten Bereichs vermieden werden, sodass der Übergang von der Sonnenblende in den transparenten Bereich der Windschutzscheibe graduell verläuft, was ästhetisch ansprechender aussieht.

In einer vorteilhaften Ausgestaltung ist der Bereich der ersten Zwischenschicht, also der Bereich zwischen dem Funktionselement und der Außenscheibe getönt. Dies bewirkt einen besonders ästhetischen Eindruck bei Draufsicht auf die Außenscheibe. Der Bereich der zweiten Zwischenschicht zwischen Funktionselement und Innenscheibe kann optional zusätzlich gefärbt oder getönt sein.

Die Verbundscheibe mit elektrisch steuerbarem Funktionselement ist vorteilhafterweise als Windschutzscheibe mit elektrisch steuerbarer Sonnenblende ausgebildet.

Eine solche Windschutzscheibe weist eine Oberkante und eine Unterkante, sowie zwei zwischen Oberkante und Unterkante verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Steuerung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Das Funktionselement ist dann vorteilhafterweise oberhalb des zentralen Sichtfelds (Sichtfeld B) angeordnet. Das bedeutet, dass das Funktionselement im Bereich zwischen dem zentralen Sichtfeld und der Oberkante der Windschutzscheibe angeordnet ist. Das Funktionselement muss nicht den gesamten Bereich abdecken, ist aber vollständig innerhalb dieses Bereichs positioniert und ragt nicht in das zentrale Sichtfeld hinein. Anders ausgedrückt, weist das Funktionselement einen geringeren Abstand zur Oberkante der Windschutzscheibe auf als der zentrale Sichtbereich. Somit wird die Transmission des zentralen Sichtfelds nicht durch das Funktionselement beeinträchtigt, welches an einer ähnlichen Stelle positioniert ist wie eine klassische mechanische Sonnenblende im heruntergeklappten Zustand.

Die Windschutzscheibe ist bevorzugt für ein Kraftfahrzeug vorgesehen, besonders bevorzugt für einen Personenkraftwagen.

In einer bevorzugten Ausgestaltung ist das Funktionselement, genauer die Seitenkanten des Funktionselements, umlaufend von einer dritten Zwischenschicht umgeben. Die dritte Zwischenschicht ist rahmenartig ausgebildet mit einer Aussparung, in welche das Funktionselement eingelegt ist. Die dritte Zwischenschicht kann ebenfalls durch eine thermoplastische Folie gebildet werden, in welche die Aussparung durch Ausschneiden eingebracht worden ist. Alternativ kann die dritte Zwischenschicht auch aus mehreren Folienabschnitten um das Funktionselement zusammengesetzt werden. Die Zwischenschicht ist bevorzugt aus insgesamt mindestens drei flächig aufeinander angeordneten thermoplastischen Schichten gebildet, wobei die mittlere Schicht eine Aussparung ausweist, in der das Funktionselement angeordnet ist. Bei der Herstellung wird die dritte Zwischenschicht zwischen der ersten und der zweiten Zwischenschicht angeordnet, wobei die Seitenkanten aller Zwischenschichten bevorzugt in Deckung angeordnet sind. Die dritte Zwischenschicht weist bevorzugt etwa die gleiche Dicke auf wie das Funktionselement. Dadurch wird der lokale Dickenunterschied der Windschutzscheibe, der durch das örtlich begrenzte Funktionselement eingebracht wird, kompensiert, sodass Glasbruch beim Laminieren vermieden werden kann.

Die in Durchsicht durch die Windschutzscheibe sichtbaren Seitenkanten des Funktionselements sind bevorzugt bündig mit der dritten Zwischenschicht angeordnet, sodass zwischen der Seitenkante des Funktionselements und der zugeordneten Seitenkante der Zwischenschicht keine Lücke existiert. Das gilt insbesondere für die Unterkante des Funktionselements, die typischerweise sichtbar ist. So ist die Grenze zwischen dritter Zwischenschicht und Funktionselement optisch unauffälliger.

In einer bevorzugten Ausgestaltung sind die Unterkanten des Funktionselements und des getönten Bereichs der Zwischenschicht(en) an die Form der Oberkante der Windschutzscheibe angepasst, was ein optisch ansprechenderes Erscheinungsbild bewirkt. Da die Oberkante einer Windschutzscheibe typischerweise gebogen ist, insbesondere konkav gebogen, ist auch die Unterkante des Funktionselements und des getönten Bereichs bevorzugt gebogen ausgestalten. Besonders bevorzugt sind die Unterkanten des Funktionselements im Wesentlichen parallel zur Oberkante der Windschutzscheibe ausgebildet. Es ist aber auch möglich, die Sonnenblende aus zwei jeweils geraden Hälften aufzubauen, die in einem Winkel zueinander angeordnet sind und der Form der Oberkante v-förmig angenähert sind.

In einer Ausgestaltung der Erfindung ist das Funktionselement durch Isolierungslinien in Segmente aufgeteilt. Die Isolierungslinien können insbesondere in die Flächenelektroden eingebracht sein, sodass die Segmente der Flächenelektrode elektrisch voneinander isoliert sind. Die einzelnen Segmente sind unabhängig voneinander mit der Spannungsquelle verbunden, sodass sie separat angesteuert werden können. So können verschiedene Bereich der Sonnenblende unabhängig geschaltet werden. Besonders bevorzugt sind die Isolierungslinien und die Segmente in Einbaulage horizontal angeordnet. Damit kann die Höhe der Sonnenblende vom Benutzer gesteuert werden. Der Begriff "horizontal" ist hier breit auszulegen und bezeichnet eine Ausbreitungsrichtung, die bei einer Windschutzscheibe zwischen den Seitenkanten der Windschutzscheibe verläuft. Die Isolierungslinien müssen nicht notwendigerweise gerade sein, sondern können auch leicht gebogen sein, bevorzugt angepasst an eine eventuelle Biegung der Oberkante der Windschutzscheibe, insbesondere im Wesentlichen parallel zur Oberkante der Windschutzscheibe. Vertikale Isolierungslinien sind natürlich auch denkbar.

Die Isolierungslinien weisen beispielsweise eine Breite von 5 µm bis 500 µm, insbesondere 20 µm bis 200 µm auf. Die Breite der Segmente, also der Abstand benachbarter Isolierungslinien, kann vom Fachmann gemäß den Anforderungen im Einzelfall geeignet gewählt werden.

Die Isolierungslinien können durch Laserablation, mechanisches Schneiden oder Ätzen während der Herstellung des Funktionselements eingebracht werden. Bereits laminierte Mehrschichtfolien können auch nachträglich noch mittels Laserablation segmentiert werden.

Die Oberkante und die Seitenkanten oder alle Seitenkanten des Funktionselements werden in Durchsicht durch die Verbundscheibe bevorzugt von einem opaken Abdeckdruck oder durch einen äußeren Rahmen verdeckt. Windschutzscheiben weisen typischerweise einen umlaufenden peripheren Abdeckdruck aus einer opaken Emaille auf, der insbesondere dazu dient, den zum Einbau der Windschutzscheibe verwendete Kleber vor UV-Strahlung zu schützen und optisch zu verdecken. Dieser periphere Abdeckdruck wird bevorzugt dazu verwendet, auch die Oberkante und die Seitenkante des Funktionselements zu verdecken, sowie die erforderlichen elektrischen Anschlüsse. Die Sonnenblende ist dann vorteilhaft ins Erscheinungsbild der Windschutzscheibe integriert und lediglich die Unterkante ist potentiell vom Betrachter zu erkennen. Bevorzugt weist sowohl die Außenscheibe als auch die Innenscheibe einen Abdeckdruck auf, sodass die Durchsicht von beiden Seiten gehindert wird.

Das Funktionselement kann auch Aussparungen oder Löcher aufweisen, etwa im Bereich sogenannter Sensorfenster oder Kamerafenster. Diese Bereiche sind dafür vorgesehen, mit Sensoren oder Kameras ausgestattet zu werden, deren Funktion durch ein steuerbares Funktionselement im Strahlengang beeinträchtigt werden würde, beispielsweise Regensensoren. Es ist auch möglich, die Sonnenblende mit mindestens zwei voneinander getrennten Funktionselementen zu realisieren, wobei zwischen den Funktionselementen ein Abstand besteht, der einen Raum für Sensor- oder Kamerafenster bereitstellt.

Das Funktionselement (oder die Gesamtheit der Funktionselemente im vorstehend beschriebenen Fall von mehreren Funktionselementen) ist bevorzugt über die gesamte Breite der Verbundscheibe beziehungsweise der Windschutzscheibe angeordnet, abzüglich eines beidseitigen Randbereichs mit einer Breite von beispielsweise 2 mm bis 50 mm. Auch zur Oberkante weist das Funktionselement bevorzugt einen Abstand von beispielsweise 2 mm bis 200 mm auf. Das Funktionselement ist so innerhalb der Zwischenschicht eingekapselt und vor Kontakt mit der umgebenden Atmosphäre und Korrosion geschützt.

Die Außenscheibe und die Innenscheibe sind bevorzugt aus Glas gefertigt, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Aluminosililatglas, oder aus starren klaren Kunststoffen, beispielsweise Polycarbonat oder Polymethylmethacrylat. Die Scheiben können klar sein, oder auch getönt oder gefärbt. Windschutzscheiben müssen dabei im zentralen Sichtbereich eine ausreichende Lichttransmission aufweisen, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder niedrig-emissive Beschichtungen).

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm.

Die Erfindung umfasst außerdem ein Verfahren zur Herstellung der erfindungsgemäßen Verbundscheibe, wobei zumindest
a) eine Außenscheibe, eine erste Zwischenschicht, ein erfindungsgemäßes Funktionselement mit elektrisch steuerbaren optischen Eigenschaften, eine zweite Zwischenschicht und eine Innenscheibe in dieser Reihenfolge übereinander angeordnet werden,
b) die Außenscheibe und die Innenscheibe durch Lamination verbunden werden, wobei aus der ersten Zwischenschicht und der zweiten Zwischenschicht eine Zwischenschicht mit eingelagertem Funktionselement gebildet wird.

Die elektrische Kontaktierung der Flächenelektroden des Funktionselements erfolgt bevorzugt vor dem Laminieren der Verbundscheibe.

Eventuell vorhandene Drucke, beispielsweise opake Abdeckdrucke oder aufgedruckte Sammelleiter zur elektrischen Kontaktierung des Funktionselements werden bevorzugt im Siebdruckverfahren aufgebracht.

Das Laminieren erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Bei der Herstellung des Funktionselements mit elektrisch steuerbaren optischen Eigenschaften wird zumindest:
a) eine Stapelfolge aus einer ersten Trägerfolie, einer ersten Flächenelektrode, einer aktiven Schicht, einer zweiten Flächenelektrode und einer zweiten Trägerfolie bereitgestellt,
b) die erste Trägerfolie an mindestens einer Seitenkante, bevorzugt an allen Seitenkanten, um einen Bereich der Breite u zurückgeschnitten, wodurch ein überstehender Bereich der zweiten Trägerfolie gebildet wird, und
c) eine Sperrfolie auf dem überstehenden Bereich und einem an die Seitenkante, einer Austrittsfläche der aktiven Schicht und einem angrenzenden Randbereich der ersten Trägerfolie angeordnet.

Durch die Anordnung der Sperrschicht wird die Austrittsfläche sicher und dauerhaft versiegelt.

In einer vorteilhaften Ausführungsform des Verfahrens wird im Verfahrensschritt c) die Sperrfolie und die erste und/oder zweite Trägerfolie abschnittsweise oder vollständig miteinander verklebt, beispielsweise mit einem Acryl- oder Acrylat-Kleber. Derartige fixierte Sperrfolien lassen sich leichter und präziser verarbeiten, insbesondere bei Automation.

In einer vorteilhaften Ausführungsform des Verfahrens wird eine elektrische Kontaktierung wie eine Busbar auf dem überstehenden Bereich der zweiten Trägerfolie angeordnet. Die elektrische Kontaktierung kann hier mit der Flächenelektrode auf der zweiten Trägerfolie verbunden sein.

In einer vorteilhaften Ausführungsform des Verfahrens wird zumindest in einem Bereich einer weiteren Seitenkante die zweite Trägerfolie zurückgeschnitten, wodurch ein überstehender Bereich der ersten Trägerfolie gebildet wird, und eine weitere Sperrfolie auf dem überstehenden Bereich, der Austrittsfläche der aktiven Schicht und einem angrenzenden Randbereich der zweiten Trägerfolie angeordnet. In diesem Bereich kann vorteilhafterweise eine weitere elektrische Kontaktierung wie eine Busbar angeordnet werden. Die elektrische Kontaktierung kann hier mit der Flächenelektrode auf der ersten Trägerfolie verbunden sein.

Die Erfindung umfasst weiterhin die Verwendung der erfindungsgemäßen Verbundscheibe mit elektrisch steuerbarem Funktionselement als Innenverglasung oder Außenverglasung in einem Fahrzeug oder einem Gebäude, wobei das elektrisch steuerbare Funktionselement als Sonnenschutz, als thermischer Schutz oder als Sichtschutz verwendet wird. Gezeigt ist weiterhin die Verwendung der erfindungsgemäßen Verbundscheibe als Windschutzscheibe oder Dachscheibe eines Fahrzeugs, wobei das elektrisch steuerbare Funktionselement als Sonnenblende verwendet wird. Auch hierbei kann eine Segmentierung vorteilhaft sein, damit beim Wegfall eines Rollos oder einer Blende der Sonneneinfall lokal individuell angepasst werden kann.

Ein großer Vorteil der Erfindung besteht bei Verbundscheiben als Windschutzscheibe darin, dass auf eine klassische am Fahrzeugdach montierte, mechanisch klappbare Sonnenblende verzichtet werden kann. Die Erfindung umfasst daher auch ein Fahrzeug, bevorzugt Kraftfahrzeug, insbesondere Personenkraftwagen, welches keine solche klassische Sonnenblende aufweist.

Gezeigt ist außerdem die Verwendung eines getönten oder gefärbten Bereichs einer Zwischenschicht zur Verbindung eines Funktionselements mit elektrisch steuerbaren optischen Eigenschaften mit einer Außenscheibe oder einer Innenscheibe einer Windschutzscheibe, wobei durch den getönten oder gefärbten Bereich der Zwischenschicht und das Funktionselement eine elektrisch steuerbare Sonnenblende realisiert wird. Es versteht sich, dass der getönte oder gefärbte Bereich auch vollflächig sein kann und die gesamte Zwischenschicht umfassen kann.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Figur 1: eine vergrößerte Darstellung eines Ausschnitts eines Funktionselements,
- Figur 2A: eine Draufsicht auf eine erfindungsgemäße Verbundscheibe,
- Figur 2B: einen Querschnitt durch die Verbundscheibe aus Figur 2A entlang der Schnittlinie X-X',
- Figur 3A, 3B, 3C: Darstellung der einzelnen Verfahrensschritte zur Herstellung eines Funktionselements und
- Figur 4: ein Ausführungsbeispiel des Verfahrens anhand eines Flussdiagramms.

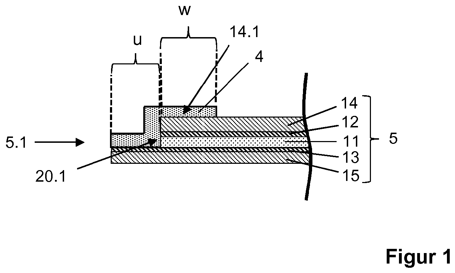

Figur 1 zeigt eine vergrößerte Darstellung eines Ausschnitts eines Funktionselements 5 im Bereich einer Seitenkante 5.1 des Funktionselements.

Das steuerbare Funktionselement 5 ist beispielsweise eine PDLC-Mehrschichtfolie, bestehend aus einer aktiven Schicht 11, die zwischen einer ersten Flächenelektrode 12 und einer zweiten Flächenelektrode 13 angeordnet ist. Die erste Flächenelektrode 12 weist auf der der aktiven Schicht 11 abgewandten Oberfläche eine erste Trägerfolie 14 auf, die die Flächenelektrode 12 stabilisiert. Die zweite Flächenelektrode 13 weist auf der der aktiven Schicht 11 abgewandten Oberfläche eine zweite Trägerfolie 15 auf, die die zweite Flächenelektrode 13 stabilisiert. Die aktive Schicht 11 enthält hier eine Polymermatrix mit darin dispergierten Flüssigkristallen, die sich in Abhängigkeit der an die Flächenelektroden 12, 13 angelegten elektrischen Spannung ausrichten, wodurch die optischen Eigenschaften gesteuert werden können. Die Trägerfolien 14, 15 bestehen aus PET und weisen eine Dicke von beispielsweise 0,14 mm auf. Die Trägerfolien 14, 15 sind mit einer zur aktiven Schicht 11 weisenden Beschichtung aus ITO mit einer Dicke von etwa 100 nm versehen, welche die Flächenelektroden 12, 13 ausbilden. Die Flächenelektroden 12, 13 werden beispielsweise in bekannter Weise mittels eines Sputter-Prozesses aufgetragen. Die Flächenelektroden 12, 13 sind über nicht dargestellte Sammelleiter (beispielweise ausgebildet durch einen silberhaltigen Siebdruck) und nicht dargestellte Verbindungskabel mit der Bordelektrik verbindbar.

Im dargestellten Ausgestaltungsbeispiel ist die zweite Trägerfolie 15 im Vergleich zur ersten Trägerfolie 14 verlängert ausgebildet, was im Folgenden auch Überstand oder überstehender Bereich 15.1 genannt wird. Mit anderen Worten, die zweite Trägerfolie 15 ragt in der Ebene des Funktionselements 5 über die erste Trägerfolie 14 hinaus.

Eine Sperrfolie 4 ist im überstehenden Bereich 15.1 an der Seitenkante 5.1 auf der zweiten Trägerfolie 15 und in einem Randbereich der Breite w der ersten Trägerfolie 14 angeordnet und flächig verbunden. Dadurch wird die Austrittsfläche 20.1. der aktiven Schicht 11 an der Seitenkante 5.1 vollständig bedeckt und versiegelt. Die Sperrfolie 4 ist dabei auf der innenliegenden Oberfläche der zweiten Trägerfolie 15 und auf dem Randbereich 14.1 der außenliegenden Oberfläche der ersten Trägerfolie 14 angeordnet. Innenliegende Oberfläche der Trägerfolien und außenliegende Oberflächen der Trägerfolien beziehen sich dabei auf die Oberflächen relativ zum Funktionselement 5.

In diesem Beispiel sind weitere Sperrfolien 4 auf überstehenden Bereichen der zweiten Trägerfolie an allen Seitenkanten des Funktionselements angeordnet (in Figur 1 nicht dargestellt).

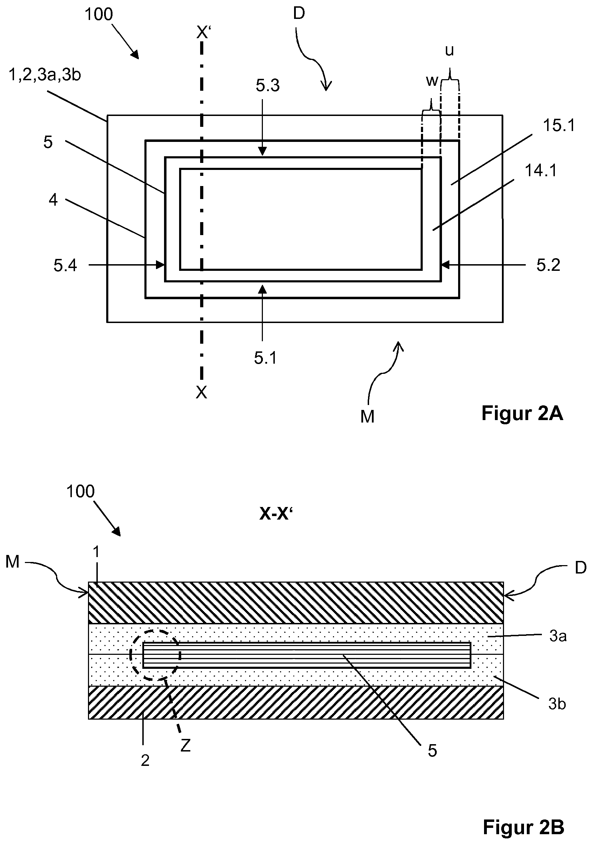

Figur 2A und Figur 2B zeigen je ein Detail einer erfindungsgemäßen Verbundscheibe 100. Die Verbundscheibe 100 umfasst eine Außenscheibe 1 und eine Innenscheibe 2, die über eine erste Zwischenschicht 3a und eine zweite Zwischenschicht 3b miteinander verbunden sind. Die Außenscheibe 1 weist eine Dicke von 2,1 mm auf und besteht beispielsweise aus einem klaren Kalk-Natron-Glas. Die Innenscheibe 2 weist eine Dicke von 1,6 mm auf und besteht beispielsweise ebenfalls aus einem klaren Kalk-Natron-Glas. Die Verbundscheibe 100 weist eine mit D bezeichnete erste Kante auf, die im Folgenden Oberkante genannt wird. Die Verbundscheibe 100 weist eine mit M bezeichnete zweite Kante auf, die der Oberkante D gegenüber angeordnet ist und im Folgenden Unterkante genannt wird. Die Verbundscheibe 100 kann beispielsweise als Architekturverglasung in den Rahmen eines Fensters mit weiteren Scheiben zu einer Isolierverglasung angeordnet sein. Es versteht sich, dass die Verbundscheibe 100 auch als Dachscheibe eines Fahrzeugs oder bei entsprechender Dimensionierung als Windschutzscheibe oder ähnliches ausgebildet und verwendet werden kann.

Zwischen der ersten Zwischenschicht 3a und der zweiten Zwischenschicht 3b ist ein Funktionselement 5 angeordnet, welches durch eine elektrische Spannung in seinen optischen Eigenschaften steuerbar ist. Die elektrischen Zuleitungen sind der Einfachheit halber nicht dargestellt.

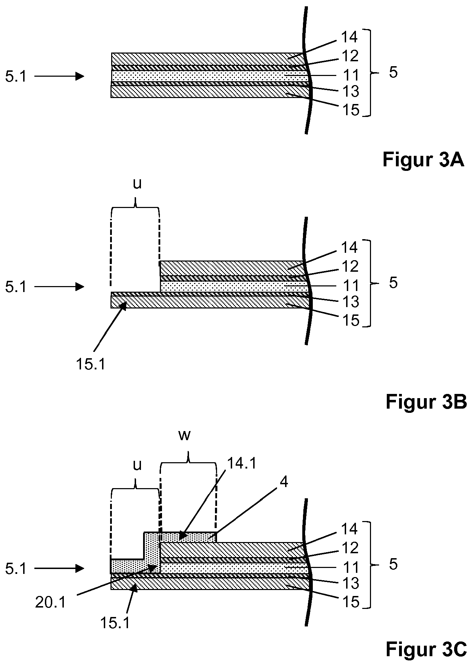

Das Funktionselement aus Figur 1 ist hier beispielsweise der vergrößerte Bereich Z, welcher im Folgenden auch in Figur 3C wiedergegeben ist.

Die Zwischenschichten 3a, 3b umfassen jeweils eine thermoplastische Folie mit einer Dicke von 0,38 mm. Die Zwischenschichten 3a, 3b bestehen beispielsweise aus 78 Gew.-% Polyvinylbutyral (PVB) und 20 Gew.-% Triethylene glycol bis(2-ethylhexanoate) als Weichmacher.

Die zweite Trägerfolie 15 weist hier beispielsweise einen allseitigen Überstand u von beispielsweise 5 mm über die erste Trägerfolie 14 auf. Allseitig bedeutet hier, das ein Überstand u über jede Seitenkante 5.1, 5.2, 5.3, 5.4 des Funktionselements 5 vorliegt. Eine hier beispielsweise rahmenförmig ausgebildete, einstückige Sperrfolie 4 ist auf dem allseitigen überstehenden Bereich 15.1 der zweiten Trägerfolie 15 und auf einem Randbereich 14.1 der Breite w der ersten Trägerfolie 14 angeordnet und mit diesen verbunden. Durch die allseitige rahmenförmige Ausbildung der Sperrfolie 4 wird die Austrittfläche 20.1 der aktiven Schicht 11 allseitig versiegelt.

Es versteht sich, dass die Austrittsflächen der aktiven Schicht zwischen der zweiten Trägerfolie und der ersten Trägerfolie an den einzelnen Seitenkanten 5.1, 5.2, 5.3, 5.4 auch mit jeweils einer oder mehreren streifenförmigen Sperrfolien bedeckt und versiegelt werden können.

Die Sperrfolie 4 besteht hier beispielsweise im Wesentlichen aus PET, das heißt zu mindestens 97 Gew.-%. Die Sperrfolie 4a, 4b enthält weniger als 0,5 Gew.-% Weichmacher und ist dazu geeignet, die Diffusion von Weichmacher aus den Zwischenschichten 3a, 3b über die Seitenkanten 5.1, 5.2, 5.3, 5.4 in die aktive Schicht 11 des Funktionselements 5 hinein zu reduzieren oder zu unterbinden.

Derartige Verbundscheiben 100 zeigen in Alterungstests eine deutlich reduzierte Aufhellung im Randbereich des Funktionselements 5, da eine Diffusion des Weichmachers aus den Zwischenschichten 3a, 3b in das Funktionselement 5 und eine dadurch einhergehende Degradation des Funktionselements 5 vermieden wird.

In einer vorteilhaften Weiterbildung des Funktionselements 5 wird zwischen der Sperrfolie 4 und den sich berührenden Abschnitten der zweiten Trägerfolie 15 und dem Randbereich 14.1 der ersten Trägerfolie 14 ein Klebemittel, beispielsweise ein Kleber auf Acrylat-Basis angeordnet, der die Sperrfolie 4 fest mit den Trägerfolien 14, 15 verklebt. Die Klebeverbindung verhindert das Verrutschen der Sperrfolie 4 bei der Montage. Gleichzeitig werden Einschlüsse von Luftblasen und dadurch entstehende optischen Störungen oder Beeinträchtigungen vermieden, da die Sperrfolie 4 fest auf der zweiten Trägerfolie 15 und der ersten Trägerfolie 14 aufliegt.

Es versteht sich, dass die erfindungsgemäße Verbundscheibe nicht auf das hier dargestellte Ausgestaltungsbeispiel beschränkt ist. Weitere hier nicht dargestellte Ausgestaltungsbeispiele umfassen beispielsweise Windschutzscheiben oder Dachscheiben von Fahrzeugen, und den Einsatz von elektrisch steuerbaren Funktionselementen 5 als Sonnenblende.

Figur 3A, 3B und 3C zeigen Ausgestaltungsbeispiele des Funktionselements 5 während der Herstellung.

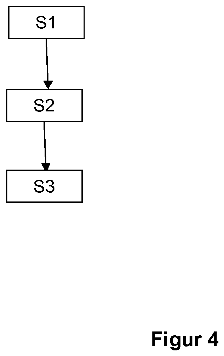

Figur 4 zeigt ein Ausführungsbeispiel des Herstellungsverfahrens anhand eines Flussdiagramms mit den Verfahrensschritten S1 bis S3.

Zunächst wird in einem ersten Verfahrensschritt S1 eine Stapelfolge aus einer ersten Trägerfolie 14, einer ersten Flächenelektrode 12, einer aktiven Schicht 11, einer zweiten Flächenelektrode 13 und einer zweiten Trägerfolie 15 bereitgestellt.

Derartige Stapelfolgen sind beispielsweise als Mehrschicht-Folienmaterial kommerziell als Meterware erhältlich. Anschließend wird die Meterware konfektioniert und auf die Abmessungen der späteren Verwendung beschnitten, beispielsweise durch Laserschneiden.

Figur 3A zeigt eine vergrößerte Darstellung der Seitenkante 5.1 einer solchen Stapelfolge. Die verschiedenen Elemente der Stapelfolge, also die erste Trägerfolie 14, die erste Flächenelektrode 12, die aktive Schicht 11, die zweite Flächenelektrode 13 und die zweite Trägerfolie 15 weisen gleiche Dimensionen auf und sind deckungsgleich übereinandergestapelt.

In einem zweiten Schritt S2 wird beispielsweise die erste Trägerfolie 14 an mindestens einer Seitenkante (hier 5.1) um einen Bereich der Breite u zurückgeschnitten, wodurch ein überstehender Bereich 15.1 der zweiten Trägerfolie 15 gebildet wird. Das Ergebnis ist entsprechend in Figur 3B dargestellt.

In einem dritten Verfahrensschritt S3 wird eine Sperrfolie 4 auf dem überstehenden Bereich 15.1 der zweiten Trägerfolie 15, der Austrittsfläche 20.1 der aktiven Schicht 11 und einem angrenzenden Randbereich (14.1) der Breite w der ersten Trägerfolie (14) angeordnet. Das Ergebnis ist entsprechend in Figur 3C dargestellt.

Die Sperrfolie 4 kann dabei optional mit der ersten Trägerfolie 14 beispielsweise durch Verkleben, Verschmelzen oder Verschweißen abschnittsweise oder vollflächig verbunden werden.

Unabhängig davon werden durch Lamination des Funktionselements 5 in einer Verbundscheibe 100 und durch den inneren Druck in der fertiglaminierten Verbundscheibe 100 die Sperrfolie 4 fest auf die erste Trägerfolie 14 und die zweite Trägerfolie 15 fest gepresst und fixiert, wodurch eine hermetische Abdichtung erfolgt.

### Bezugszeichenliste:

- 1: Außenscheibe
- 2: Innenscheibe
- 3a: erste Zwischenschicht
- 3b: zweite Zwischenschicht
- 4: Sperrfolie
- 5: Funktionselement mit elektrisch steuerbaren optischen Eigenschaften 5.1,5.2,5.3,5.4 Seitenkante des Funktionselements 5
- 11: aktive Schicht des Funktionselements 5
- 12: erste Flächenelektrode des Funktionselements 5
- 13: zweite Flächenelektrode des Funktionselements 5
- 14: erste Trägerfolie
- 14.1: Randbereich der ersten Trägerfolie 14
- 15: zweite Trägerfolie
- 15.1: überstehender Bereich der zweiten Trägerfolie 15
- 16: Isolierungslinien
- 20.1: Austrittsfläche
- 100: Verbundscheibe

- B: zentrales Sichtfeld der Windschutzscheibe
- D: Oberkante der Windschutzscheibe, Dachkante
- M: Unterkante der Windschutzscheibe, Motorkante
- u: Überstand, Breite des überstehenden Bereichs 15.1
- w: Breite des Randbereichs 14.1
- S1, S2, S3: Verfahrensschritte
- X-X': Schnittlinie
- Z: vergrößerter Bereich

## Patentansprüche

1. Verbundscheibe (100), umfassend eine Stapelfolge aus einer Außenscheibe (1), einer ersten Zwischenschicht (3a), einer zweiten Zwischenschicht (3b) und einer Innenscheibe (2), wobei die Zwischenschichten (3a, 3b) mindestens eine thermoplastische polymere Folie mit mindestens einem Weichmacher enthalten, und zwischen der ersten Zwischenschicht (3a) und der zweiten Zwischenschicht (3b) zumindest abschnittsweise ein Funktionselement (5) mit elektrisch steuerbaren optischen Eigenschaften angeordnet ist, wobei das Funktionselement (5) umfasst:
eine Stapelfolge aus einer ersten Trägerfolie (14), einer ersten Flächenelektrode (12), einer aktiven Schicht (11), einer zweiten Flächenelektrode (13) und einer zweiten Trägerfolie (15), wobei die zweite Trägerfolie (15) einen überstehenden Bereich (15.1) über die erste Trägerfolie (14) aufweist und eine Sperrfolie (4) auf mindestens einem Randbereich (14.1) der ersten Trägerfolie (14) und dem überstehenden Bereich (15.1) der zweiten Trägerfolie (15) angeordnet ist, wobei die Sperrfolie im überstehenden Bereich auf einer innenliegenden Oberfläche der zweiten Trägerfolie (15) angeordnet ist, wobei die Sperrfolie (4) und die zweite Trägerfolie (15) im Bereich des Überstands (15.1) zumindest abschnittsweise oder vollflächig verbunden sind, wobei die Sperrfolie (4) mit der innenliegenden Oberfläche der zweiten Trägerfolie (15) bevorzugt stoffschlüssig und/oder formschlüssig verbunden ist, besonders bevorzugt verschmolzen und/oder verklebt ist, wobei die Sperrfolie (4) nicht die außenliegende Oberfläche der zweiten Trägerfolie (15) berührt, und wobei die Sperrfolie (4) und die erste Trägerfolie (14) im Randbereich (14.1) abschnittsweise oder vollflächig miteinander verbunden sind, wobei die Sperrfolie (4) mit einer außenliegenden Oberfläche der ersten Trägerfolie (14) bevorzugt stoffschlüssig und/oder formschlüssig verbunden ist, besonders bevorzugt verschmolzen und/oder verklebt ist, wobei eine Austrittsfläche (20.1) der aktiven Schicht (11) zwischen der ersten Trägerfolie (14) und der zweiten Trägerfolie (15) durch die Sperrfolie (4) versiegelt ist.

2. Verbundscheibe (100) nach Anspruch 1, wobei der Überstand u zumindest an einer Seitenkante (5.1), bevorzugt an drei Seitenkanten (5.1, 5.2, 5.3) und besonders bevorzugt an allen Seitenkanten (5.1, 5.2, 5.3, 5.4), der zweiten Trägerfolie (15) angeordnet ist.

3. Verbundscheibe (100) nach Anspruch 1 oder Anspruch 2, wobei der Überstand u mindestens 4 mm, bevorzugt 6 mm, besonders bevorzugt von 6 mm bis 20 mm und insbesondere bevorzugt 8 mm bis 10 mm, beträgt.

4. Verbundscheibe (100) nach einem der Ansprüche 1 bis 3, wobei die aktive Schicht (11) Flüssigkristalle, bevorzugt Polymer Dispersed Liquid Crystals (PDLC) enthält oder daraus besteht.

5. Verbundscheibe (100) nach einem der Ansprüche 1 bis 4, wobei die Zwischenschicht (3a,3b) mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 40 Gew.-% eines Weichmachers enthält und der Weichmacher bevorzugt aliphatische Diester des Tri- bzw. Tetraethylenglykols, besonders bevorzugt Triethylenglykol-bis-(2-ethyl-hexanoat), enthält oder daraus besteht.

6. Verbundscheibe (100) nach einem der Ansprüche 1 bis 5, wobei die Zwischenschicht (3a,3b) mindestens 60 Gew.-%, bevorzugt mindestens 70 Gew.-%, besonders bevorzugt mindestens 90 Gew.-% und insbesondere mindestens 97 Gew.-% Polyvinylbutyral (PVB) enthält.

7. Verbundscheibe (100) nach einem der Ansprüche 1 bis 6, wobei die Sperrfolie (4) derart ausgebildet ist, dass sie die Diffusion von Weichmacher durch die Sperrfolie (4) verhindert.

8. Verbundscheibe (100) nach einem der Ansprüche 1 bis 7, wobei die Sperrfolie (4) Weichmacher-arm oder Weichmacher-frei ist und bevorzugt Polyethylenterephthalat (PET) oder Polyvinylfluorid (PVF) enthält oder daraus besteht.

9. Verbundscheibe (100) nach einem der Ansprüche 1 bis 8, wobei das Funktionselement (5) umlaufend von einer dritten Zwischenschicht (3c) umgeben ist.

10. Verfahren zur Herstellung der Verbundscheibe (100) nach einem der Ansprüche 1 bis 9, wobei zumindest
a) eine Außenscheibe (1), eine erste Zwischenschicht (3a), ein Funktionselement (5) mit elektrisch steuerbaren optischen Eigenschaften, eine zweite Zwischenschicht (3b) und eine Innenscheibe (2) in dieser Reihenfolge übereinander angeordnet werden,
b) die Außenscheibe (1) und die Innenscheibe (2) durch Lamination verbunden werden, wobei aus der ersten Zwischenschicht (3a) und der zweiten Zwischenschicht (3b) eine Zwischenschicht mit eingelagertem Funktionselement (5) gebildet wird.

11. Verfahren nach Anspruch 10, bei welche die elektrische Kontaktierung von Flächenelektroden (12, 13) des Funktionselements (5) vor dem Laminieren der Verbundscheibe (100) erfolgt.

12. Verfahren nach einem der Ansprüche 10 oder 11, bei welchem zur Herstellung des Funktionselements (5) mit elektrisch steuerbaren optischen Eigenschaften zumindest:
a) eine Stapelfolge aus einer ersten Trägerfolie (14), einer ersten Flächenelektrode (12), einer aktiven Schicht (11), einer zweiten Flächenelektrode (13) und einer zweiten Trägerfolie (15) bereitgestellt wird,
b) die erste Trägerfolie (14) an mindestens einer Seitenkante (5.1) um einen Bereich der Breite u zurückgeschnitten wird, wodurch ein überstehender Bereich (15.1) der zweiten Trägerfolie (15) gebildet wird, und
c) eine Sperrfolie (4) auf dem überstehenden Bereich (15.1), einer Austrittsfläche (20.1) der aktiven Schicht (11) und einem angrenzenden Randbereich (14.1) der ersten Trägerfolie (14) angeordnet wird.

13. Verfahren nach Anspruch 12, bei welchem zumindest in einem Bereich einer weiteren Seitenkante die zweite Trägerfolie (15) zurückgeschnitten wird, wodurch ein überstehender Bereich der ersten Trägerfolie (14) gebildet wird, und eine weitere Sperrfolie (4) auf dem überstehenden Bereich, der Austrittsfläche (20.1) der aktiven Schicht (11) und einem angrenzenden Randbereich der zweiten Trägerfolie (15) angeordnet wird.

14. Verwendung der Verbundscheibe (100) nach einem der Ansprüche 1 bis 9 als Innenverglasung oder Außenverglasung in einem Fahrzeug oder einem Gebäude und das elektrisch steuerbare Funktionselement (5) als Sonnenschutz, als thermischer Schutz oder als Sichtschutz, insbesondere als Windschutzscheibe oder Dachscheibe eines Fahrzeugs, wobei das elektrisch steuerbare Funktionselement (5) als Sonnenblende verwendet wird.

## Claims

1. Composite pane (100), comprising a stack sequence formed of an outer pane (1), a first intermediate layer (3a), a second intermediate layer (3b), and an inner pane (2), wherein the intermediate layers (3a, 3b) contain at least one thermoplastic polymer film with at least one plasticizer, and a functional element (5) having electrically controllable optical properties is arranged between the first intermediate layer (3a) and the second intermediate layer (3b) at least in sections, wherein the functional element (5) comprises:
a stack sequence formed of a first carrier film (14), a first surface electrode (12), an active layer (11), a second surface electrode (13), and a second carrier film (15), wherein the second carrier film (15) has an overhanging region (15.1) beyond the first carrier film (14) and a barrier film (4) is arranged on at least one edge region (14.1) of the first carrier film (14) and the overhanging region (15.1) of the second carrier film (15), wherein the barrier film is arranged in the overhanging region on an inward surface of the second carrier film (15), wherein, in the overhanging region (15.1), the barrier film (4) and the second carrier film (15) are joined to one another at least in sections or over their entire surface, wherein the barrier film (4) is preferably materially and/or form-fittingly bonded to the inward surface of the second carrier film, particularly preferably fused and/or glued to one another, wherein the barrier film (4) does not touch the outward surface of the second carrier film (15), and wherein, in the edge region (14.1), the barrier film (4) and the first carrier film (14) are joined to one another in sections or over their entire surface, wherein the barrier film (4) is preferably materially and/or form-fittingly bonded to an outward surface of the first carrier film, particularly preferably fused and/or glued, wherein an exit surface (20.1) of the active layer (11) between the first carrier film (14) and the second carrier film (15) is sealed by the barrier film (4).

2. Composite pane (100) according to claim 1, wherein the overhang u is arranged at least at one side edge (5.1), preferably at three side edges (5.1, 5.2, 5.3), and particularly preferably at all side edges (5.1, 5.2, 5.3, 5.4) of the second carrier film (15).

3. Composite pane (100) according to claim 1 or claim 2, wherein the overhang u is at least 4 mm, preferably 6 mm, particularly preferably from 6 mm to 20 mm, and in particular preferably 8 mm to 10 mm.

4. Composite pane (100) according to one of claims 1 through 3, wherein the active layer (11) contains or is made of liquid crystals, preferably polymer dispersed liquid crystals (PDLC).

5. Composite pane (100) according to one of claims 1 through 4, wherein the intermediate layer (3a,3b) contains at least 3 wt.-%, preferably at least 5 wt.-%, particularly preferably at least 20 wt.-%, even more preferably at least 30 wt.-%, and in particular at least 40 wt.-% of a plasticizer and the plasticizer preferably contains or is made of aliphatic diesters of tri- or tetraethylene glycol, particularly preferably triethylene glycol bis(2-ethylhexanoate).

6. Composite pane (100) according to one of claims 1 through 5, wherein the intermediate layer (3a,3b) contains at least 60 wt.-%, preferably at least 70 wt.-%, particularly preferably at least 90 wt.-%, and in particular at least 97 wt.-% polyvinyl butyral (PVB).

7. Composite pane (100) according to one of claims 1 through 6, wherein the barrier film (4) is implemented such that it prevents the diffusion of plasticizer through the barrier film (4).

8. Composite pane (100) according to one of claims 1 through 7, wherein the barrier film (4) is low in plasticizer or free of plasticizer and preferably contains or is made of polyethylene terephthalate (PET) or polyvinyl fluoride (PVF).

9. Composite pane (100) according to one of claims 1 through 8, wherein the functional element (5) is circumferentially surrounded by a third intermediate layer (3c).

10. Method for producing a composite pane (100) according to one of claims 1 through 9, wherein at least
a) one outer pane (1), one first intermediate layer (3a), one functional element (5) having electrically controllable optical properties, one second intermediate layer (3b), and one inner pane (2) are arranged one atop another in this order,
b) the outer pane (1) and the inner pane (2) are joined by lamination, wherein an intermediate layer with an embedded functional element (5) is formed from the first intermediate layer (3a) and the second intermediate layer (3b).

11. Method according to claim 10, wherein the electrical contacting of surface electrodes (12, 13) of the functional element (5) is done before the lamination of the composite pane (100).

12. Method according to one of claims 10 or 11, wherein for producing the functional element (5) having electrically controllable optical properties at least:
a) a stack sequence formed of a first carrier film (14), a first surface electrode (12), an active layer (11), a second surface electrode (13), and a second carrier film (15) is provided,
b) the first carrier film (14) is cut back at at least one side edge (5.1) by a region of the width u, by which means an overhanging region (15.1) of the second carrier film (15) is formed, and
c) a barrier film (4) is arranged on the overhanging region (15.1), an exit surface (20.1) of the active layer (11), and an adjacent edge region (14.1) of the first carrier film (14).

13. Method according to claim 12, wherein at least in one region of another side edge, the second carrier film (15) is cut back, by which means an overhanging region of the first carrier film (14) is formed, and another barrier film (4) is arranged on the overhanging region, the exit surface (20.1) of the active layer (11), and an adjacent edge region of the second carrier film (15).

14. Use of the composite pane (100) according to one of claims 1 through 9 as interior glazing or exterior glazing in a vehicle or a building and the electrically controllable functional element (5) as a sun screen, as thermal protection or as a privacy screen, in particular as a windshield or roof panel of a vehicle, wherein the electrically controllable functional element (5) is used as a sun visor.

## Revendications

1. Vitrage composite (100), comprenant une séquence empilée formée d'un vitrage extérieur (1), d'une première couche intermédiaire (3a), d'une deuxième couche intermédiaire (3b) et d'un vitrage intérieur (2), dans lequel les couches intermédiaires (3a, 3b) contiennent au moins un film polymère thermoplastique avec au moins un plastifiant, et un élément fonctionnel (5) ayant des propriétés optiques contrôlables électriquement est disposé entre la première couche intermédiaire (3a) et la deuxième couche intermédiaire (3b) au moins par sections, dans lequel l'élément fonctionnel (5) comprend:
une séquence empilée formée d'un premier film support (14), d'une première électrode de surface (12), d'une couche active (11), d'une deuxième électrode de surface (13) et d'un deuxième film support (15), dans lequel le deuxième film support (15) présente une zone en surplomb (15.1) au-delà du premier film support (14) et un film barrière (4) est disposé sur au moins une région de bord (14.1) du premier film support (14) et la région en surplomb (15.1) du deuxième film support (15), dans lequel le film barrière est disposé dans la région en surplomb sur une surface intérieure du deuxième film support (15), dans lequel, dans la région du surplomb (15.1), le film barrière (4) et le deuxième film support (15) sont reliés l'un à l'autre au moins par sections ou sur toute leur surface, le film barrière (4) étant avantageusement lié par adhérence de matière et/ou par complémentarité de forme à la surface intérieure du deuxième film support, de préférence par fusion et/ou collage, le film barrière (4) ne touchant pas la surface extérieure du deuxième film support (15), dans lequel, dans la zone de bordure (14.1), le film barrière (4) et le premier film support (14) sont reliés entre eux par sections ou sur toute leur surface, le film barrière (4) étant avantageusement lié par adhérence de matière et/ou par complémentarité de forme à une surface extérieure du premier film support, de préférence par fusion et/ou collage, dans lequel une surface de sortie (20.1) de la couche active (11) entre le premier film support (14) et le deuxième film support (15) est scellée par le film barrière (4).

2. Vitrage composite (100) selon la revendication 1, dans lequel le débord u est disposé au moins sur un bord latéral (5.1), de préférence sur trois bords latéraux (5.1, 5.2, 5.3), et de manière particulièrement préférée sur tous les bords latéraux (5.1, 5.2, 5.3, 5.4) du deuxième film support (15).

3. Vitrage composite (100) selon la revendication 1 ou la revendication 2, dans lequel le débord u est d'au moins 4 mm, de préférence de 6 mm, de manière particulièrement préférée de 6 mm à 20 mm, et de manière particulièrement préférée de 8 mm à 10 mm.

4. Vitrage composite (100) selon l'une des revendications 1 à 3, dans lequel la couche active (11) contient ou est constituée de cristaux liquides, de préférence de cristaux liquides dispersés dans un polymère (PDLC).

5. Vitrage composite (100) selon l'une des revendications 1 à 4, dans lequel la couche intermédiaire (3a, 3b) contient au moins 3 % en poids , de préférence au moins 5 % en poids, de manière particulièrement préférée au moins 20 % en poids, de manière encore plus préférée au moins 30 % en poids, et en particulier au moins 40 % en poids d'un plastifiant, et le plastifiant contient de préférence ou est constitué de diesters aliphatiques de tri- ou tétraéthylène glycol, de manière particulièrement préférée de triéthylène glycol bis(2-éthylhexanoate).

6. Vitrage composite (100) selon l'une des revendications 1 à 5, dans lequel la couche intermédiaire (3a, 3b) contient au moins 60 % en poids, de préférence au moins 70 % en poids, de manière particulièrement préférée au moins 90 % en poids, et en particulier au moins 97 % en poids de polyvinylbutyral (PVB).

7. Vitrage composite (100) selon l'une des revendications 1 à 6, dans lequel le film barrière (4) est mis en œuvre de manière à empêcher la diffusion du plastifiant à travers le film barrière (4).

8. Vitrage composite (100) selon l'une des revendications 1 à 7, dans lequel le film barrière (4) est pauvre en plastifiant ou exempt de plastifiant et contient de préférence ou est constitué de polyéthylène téréphtalate (PET) ou de polyfluorure de vinyle (PVF).

9. Vitrage composite (100) selon l'une des revendications 1 à 8, dans lequel l'élément fonctionnel (5) est entouré circonférentiellement par une troisième couche intermédiaire (3c).

10. Procédé de fabrication d'un vitrage composite (100) selon l'une des revendications 1 à 9, dans lequel au moins
a) un vitrage extérieur (1), une première couche intermédiaire (3a), un élément fonctionnel (5) ayant des propriétés optiques contrôlables électriquement, une deuxième couche intermédiaire (3b) et un vitrage intérieur (2) sont disposés les uns au-dessus des autres dans cet ordre,
b) la vitre extérieure (1) et la vitre intérieure (2) sont assemblées par laminage, une couche intermédiaire avec un élément fonctionnel (5) intégré étant formée à partir de la première couche intermédiaire (3a) et de la deuxième couche intermédiaire (3b).

11. Procédé selon la revendication 10, dans lequel la mise en contact électrique des électrodes de surface (12, 13) de l'élément fonctionnel (5) est effectuée avant le laminage de la vitre composite (100).

12. Procédé selon l'une des revendications 10 ou 11, dans lequel, pour produire l'élément fonctionnel (5) ayant des propriétés optiques contrôlables électriquement, au moins:
a) une séquence d'empilement formée d'un premier film support (14), d'une première électrode de surface (12), d'une couche active (11), d'une deuxième électrode de surface (13) et d'un deuxième film support (15) est prévue,
b) le premier film support (14) est découpé au moins sur un bord latéral (5.1) sur une largeur u, ce qui permet de former une zone en surplomb (15.1) du deuxième film support (15), et
c) un film barrière (4) est disposé sur la zone en surplomb (15.1), une surface de sortie (20.1) de la couche active (11) et une zone de bord adjacente (14.1) du premier film support (14).

13. Procédé selon la revendication 12, dans lequel, au moins dans une région d'un autre bord latéral, le deuxième film support (15) est découpé, ce qui permet de former une région en surplomb du premier film support (14), et un autre film barrière (4) est disposé sur la région en surplomb, la surface de sortie (20.1) de la couche active (11) et une zone de bord adjacente du deuxième film support (15).

14. Utilisation du vitrage composite (100) selon l'une des revendications 1 à 9 comme vitrage intérieur ou vitrage extérieur dans un véhicule ou un bâtiment et de l'élément fonctionnel à commande électrique (5) comme pare-soleil, comme protection thermique ou comme écran d'intimité, en particulier comme pare-brise ou panneau de toit d'un véhicule, dans lequel l'élément fonctionnel à commande électrique (5) est utilisé comme pare-soleil.
